(19)

**Europäisches Patentamt**
**European Patent Office**
**Office européen des brevets**

(11) **EP 4 718 114 A1**

(12) **EUROPEAN PATENT APPLICATION**

(43) Date of publication:
**01.04.2026 Bulletin 2026/14**

(21) Application number: **25178148.0**

(22) Date of filing: **22.05.2025**

(51) International Patent Classification (IPC):
**G01S 7/497** (2006.01)    **G01S 17/86** (2020.01)
**G01S 17/931** (2020.01)

(52) Cooperative Patent Classification (CPC):
**G01S 17/86; G01S 7/497; G01S 17/89;**
**G01S 17/931**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **25.09.2024 KR 20240130221**

(71) Applicants:
• **Hyundai Motor Company**
  **Seoul 06797 (KR)**

• **Kia Corporation**
  **Seoul 06797 (KR)**

(72) Inventors:
• **Kim, Jang Yoon**
  **18280 Gyeonggi-do (KR)**
• **Song, Min Soo**
  **18280 Gyeonggi-do (KR)**

(74) Representative: **Hoffmann Eitle**
  **Patent- und Rechtsanwälte PartmbB**
  **Arabellastraße 30**
  **81925 München (DE)**

(54) **DEPTH MAP GENERATION DEVICE AND METHOD**

(57)    A depth map generation device includes a memory that stores computer-executable instructions, and at least one processor that accesses the memory and executes the instructions, wherein the at least one processor selects a target LiDAR from among a plurality of LiDARs, generates a range image using a point cloud of the target LiDAR, detects a near object area from the range image using the range image and at least one preset threshold, generates a point plane in three-dimensional coordinates based on the near object area, generates a mask corresponding to the near object area based on the point plane in an image coordinate system, and generates a depth map by removing points of other LiDARs than the target LiDAR, from the near object area using the mask.

FIG.1

EP 4 718 114 A1

# EP 4 718 114 A1

**Description**

CROSS-REFERENCE TO RELATED APPLICATION

The present application claims the benefit of priority to Korean Patent Application No. 10-2024-0130221, filed in the Korean Intellectual Property Office on September 25, 2024, the entire contents of which are incorporated herein by reference.

BACKGROUND OF THE PRESENT DISCLOSURE

Field of the Present Disclosure

The present disclosure relates to a depth map generation technology, and more specifically, to a depth map generation device and method configured for detecting a near object area based on a range image in a multi-LIDAR environment and generating a depth map by calibrating points in the near object area.

Description of Related art

In autonomous driving technology, it is essential to find out three-dimensional information of near objects or environments. Representative methods for obtaining a depth map corresponding to a camera image include stereo depth estimation, monocular camera depth prediction, and depth completion.

Stereo depth estimation is a method of measuring distance by finding disparity in images between two cameras. Since the advent of deep learning, monocular camera depth prediction, which measures depth using semantic information of a single camera image, has also made great progress. However, monocular camera depth prediction is specialized for estimating relative distances within an image, and it is difficult to measure depth in meters.

If a camera and a Light Detection and Ranging (LiDAR) are disposed in an autonomous vehicle, a depth completion technology that utilizes not only the semantic information of the camera image (CI) but also the LiDAR points projected onto the camera image may be used. The 3D information of the LiDAR points is very accurate, and the depth values of pixels where the LiDAR points are not projected may be accurately filled in by analyzing the semantic information.

Furthermore, in a vehicle environment where a plurality of multi-LIDARs and cameras are disposed, a LiDAR-based point cloud may be used to generate a depth map for a map learning DB using camera calibration information.

However, the present method may cause problems such as the point of an object not visible in a camera image being captured when using LiDAR sensors in different locations, which can lead to inaccurate information in that area, which may include a negative impact on deep learning, and in the case of near objects, the density of the LiDAR point cloud may be low, which may prevent Hidden Point Removal Filtering from working smoothly.

BRIEF SUMMARY

The present disclosure has been made to solve the above-mentioned problems occurring in the related art while advantages achieved by the related art are maintained intact.

Various aspects of the present disclosure are directed to providing a depth map generation device and method configured for detecting a near object area based on a range image in a multi-LIDAR environment and generating a depth map by correcting points in the near object area.

Various aspects of the present disclosure are directed to providing a depth map generation device and method configured for improving a depth map GT (Ground Truth) without utilizing a GPU.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a depth map generation device includes a memory that stores computer-executable instructions, and at least one processor that accesses the memory and executes the instructions, and the at least one processor is configured to select a target LiDAR from among a plurality of LiDARs, generate a range image using a point cloud of the target LiDAR, detects a near object area from the range image using the range image and at least one preset threshold, generate a point plane in three-dimensional coordinates based on the near object area, generate a mask corresponding to the near object area based on the point plane in an image coordinate system, and generate a depth map by removing points of other LiDARs than the target LiDAR, from the near object area using the mask.

In an exemplary embodiment of the present disclosure, the at least one processor may select, as the target LiDAR, a LiDAR having a most similar position and view to a target camera from among the LiDARs.

In an exemplary embodiment of the present disclosure, the at least one processor is configured to determine a region of interest that includes the near object area from the range image and detect the near object area using the region of interest and the at least one threshold.

In an exemplary embodiment of the present disclosure, the at least one processor may detect a starting point and an ending point of near object points in the ROI using preset height threshold and length threshold, and based on the starting point and the ending point of the near object points detected from a first axial direction to a second axial direction in the ROI, identify the near object area.

In an exemplary embodiment of the present disclosure, the at least one processor may transform the point cloud of the target LiDAR in a LiDAR coordinate system into the point cloud of the target LiDAR in the image coordinate system by using an extrinsic parameter between the target camera and the target LiDAR, along with an intrinsic parameter of the target camera, and generate the mask using the point plane from the point cloud of the target LiDAR in the image coordinate system.

In an exemplary embodiment of the present disclosure, the at least one processor may provide the depth map by visualizing points of the LiDARs by distance.

In an exemplary embodiment of the present disclosure, the at least one processor may provide the depth map by visualizing points of the LiDARs by individual LiDAR points.

According to an aspect of the present disclosure, a depth map generation method includes selecting a target LiDAR from among a plurality of LiDARs, generating a range image using a point cloud of the target LiDAR, detecting a near object area from the range image using the range image and at least one preset threshold, generating a point plane in three-dimensional coordinates based on the near object area, generating a mask corresponding to the near object area based on the point plane in an image coordinate system, and generating a depth map by removing points of other LiDARs than the target LiDAR, from the near object area using the mask.

In an exemplary embodiment of the present disclosure, the selecting of the target LiDAR may include selecting, as the target LiDAR, a LiDAR having a most similar position and view to a target camera from among the LiDARs.

In an exemplary embodiment of the present disclosure, the detecting of the near object area may include determining a region of interest that includes the near object area from the range image and detecting the near object area using the region of interest and the at least one threshold.

In an exemplary embodiment of the present disclosure, the detecting of the near object area may include detecting a starting point and an ending point of near object points in the ROI using preset height threshold and length threshold, and based on the starting point and the ending point of the near object points detected from a first axial direction to a second axial direction in the ROI, identifying the near object area.

In an exemplary embodiment of the present disclosure, the depth map generation method may further include transforming the point cloud of the target LiDAR in the LiDAR coordinate system into the point cloud of the target LiDAR in the image coordinate system by using an extrinsic parameter between the target camera and the target LiDAR, along with an intrinsic parameter of the target camera, and the generating of the mask may include generating the mask using the point plane from the point cloud of the target LiDAR in the image coordinate system.

In an exemplary embodiment of the present disclosure, the depth map generation method may further include providing the depth map by visualizing points of the LiDARs by distance.

In an exemplary embodiment of the present disclosure, the depth map generation method may further include providing the depth map by visualizing points of the LiDARs by individual LiDAR points.

BRIEF DESCRIPTION OF THE DRAWINGS

The above and other objects, features and advantages of the present disclosure will be more apparent from the following detailed description taken in conjunction with the accompanying drawings:

FIG. 1 is a flowchart illustrating an operation of a depth map generation method according to an exemplary embodiment of the present disclosure;

FIG. 2 is a schematic diagram providing the overall process of generating a depth map;

FIG. 3A and FIG. 3B are diagrams showing examples of an ROI determined from a range image;

FIG. 4 is an exemplary diagram for describing a process for detecting a near object area;

FIG. 5A and FIG. 5B are exemplary diagrams for describing a process for generating a point plane;

FIG. 6A and FIG. 6B are exemplary diagrams for describing a process for generating a mask;

FIG. 7A and FIG. 7B are diagrams showing examples for providing a depth map by visualizing points of LiDARs by distance and by LiDAR, respectively;

FIGS. 8A and FIG. 8B are diagrams showing other examples for providing a depth map by visualizing points of LiDARs by distance and by LiDAR, respectively;

FIG. 9 illustrates a block diagram of a depth map generation device according to another exemplary embodiment of the present disclosure; and

FIG. 10 illustrates a block diagram of a computing system for executing a depth map generation method according to an exemplary embodiment of the present disclosure.

DETAILED DESCRIPTION

Hereinafter, with reference to the accompanying drawings, various exemplary embodiments of the present disclosure will be described in detail so that those of ordinary skill in the art can easily carry out the present disclosure. However, the present disclosure may be embodied in several different forms and is not limited to the exemplary embodiments described herein.

In describing the exemplary embodiments of the present disclosure, if it is determined that a detailed description of a known configuration or function may obscure the gist of the present disclosure, a detailed description thereof will be omitted. In the drawings, parts not related to the description are omitted, and like reference numerals refer to like elements throughout the specification.

In the present disclosure, it will be understood that when an element is referred to as being "connected to", "coupled to", or "combined with" another element, the element may be directly connected or coupled to or combined with the another element or intervening elements may be present therebetween. It will be further understood that the terms "comprise", "include", or "have" when used in the present disclosure specify the presence of stated elements but do not preclude the presence or addition of one or more other elements.

In the present disclosure, terms such as first and second are used only for distinguishing one element from other elements, and do not limit the order or importance of the elements unless specifically mentioned. Therefore, within the scope of the present disclosure, a first element in one exemplary embodiment of the present disclosure may be referred to as a second element in another exemplary embodiment of the present disclosure, and similarly, the second element in one exemplary embodiment of the present disclosure may be referred to as the first element in another exemplary embodiment of the present disclosure.

In an exemplary embodiment of the present disclosure, distinct elements are only for clearly describing their features, and do not mean that the elements are separated necessarily. That is, a plurality of elements may be integrated to form a single hardware or software unit, or a single element may be distributed to form a plurality of hardware or software units. Accordingly, such integrated or distributed embodiments are included in the scope of the present disclosure, even if not otherwise noted.

In the present disclosure, elements described in various embodiments of the present disclosure are not necessarily essential elements, and some elements may be optional. Accordingly, embodiments including a subset of the elements described in an exemplary embodiment are also included in the scope of the present disclosure. Furthermore, exemplary embodiments including other elements in addition to the elements described in the various embodiments are also within the scope of the present disclosure.

In an exemplary embodiment of the present disclosure, expressions of positional relationships used in the specification, such as top, bottom, left, or right, are described for convenience of description, and when the drawings shown in the specification are viewed in reverse, the positional relationships described in the specification may also be interpreted in the opposite way.

In an exemplary embodiment of the present disclosure, each of the phrases "A or B," "at least one of A and B," "at least one of A or B," "A, B or C," "at least one of A, B and C," and "at least one of A, B, or C" may include any one of items listed along with a relevant phrase, or any possible combination thereof.

A LiDAR may emit laser pulses and measure the time it takes for the pulses to reflect back from objects within range and arrive at a receiver to estimate the distance and direction. However, compared to camera images, LiDAR resolution is relatively low, so it is hard to fill in all image pixels using LiDAR points. Therefore, multi-LIDAR may be utilized to fill in all image pixels by using LiDAR points.

In a multi-LIDAR environment, due to the differing physical locations of LiDARs, occluded areas may appear when observed from the perspective of a provided camera. For example, regions that are not visible may appear, such as occluded areas being projected onto parking lot pillars or areas occluded by vehicles being projected.

The exemplary embodiments of the present disclosure are intended to generate a depth map GT in a multi-LIDAR environment by detecting a near object area based on a range image and calibrating points in the near object area to generate a depth map in a multi-LIDAR environment.

Here, the exemplary embodiments of the present disclosure may be configured to generate a range image using a point cloud of a target LiDAR including a similar view to that of a target camera, detect a near object area based on the range image of the target LiDAR, generate a mask using the near object area, and remove points of other LiDARs than the target LiDAR from the near object area to generate a depth map GT in a multi-LIDAR environment.

That is, the exemplary embodiments of the present disclosure may be configured to generate a depth map GT in a multi-LIDAR environment by filtering LiDAR points of other views using the mask of the target LiDAR, removing points of other LiDARs that are focused on the near object area.

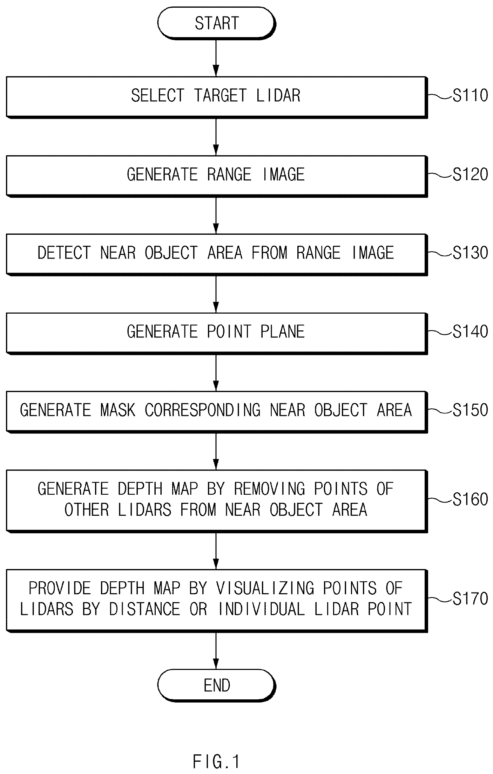

FIG. 1 is a flowchart illustrating an operation of a depth map generation method according to an exemplary embodiment of the present disclosure.

Referring to FIG. 1, a depth map generation method according to an exemplary embodiment of the present disclosure may select a target LiDAR from among a plurality of LiDARs, and generate a range image using a point cloud of the target LiDAR (S110 and S120).

According to an exemplary embodiment of the present disclosure, in S110, a LiDAR including a similar view to the target camera may be selected as the target LiDAR. That is, in S110, a LiDAR including the most similar position and view to the target camera may be selected as the target LiDAR. For example, when a right camera is the target camera, a right LiDAR may be selected as the target LiDAR from among the LiDARs, and when a left camera is the target camera, a left LiDAR may be selected as the target LiDAR from among the LiDARs.

S120 may be a process of transforming the point cloud of the target LiDAR into a range image. Transforming a point cloud into a range image is obvious to those skilled in the art, so that a detailed description thereof will be omitted.

According to an exemplary embodiment of the present disclosure, in S120, when the range image is generated, a region of interest (ROI) including the near object area may be identified or determined in the range image, allowing near object area to be detected in the region of interest excluding unnecessary parts.

When transformation into the range image is performed or the range image is generated in S120, the near object area may be detected from the range image (S130).

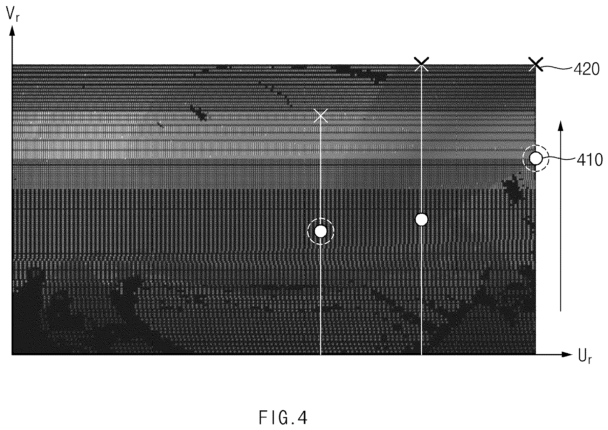

According to an exemplary embodiment of the present disclosure, in S130, the near object area may be detected in the region of interest of the range image, and the near object area may be detected in the region of interest using the region of interest and at least one preset threshold. For example, in S130, the starting point and the ending point of near object points may be detected in the region of interest using preset height threshold and length threshold, and based on the starting point and the ending point of the near object points detected from the first axial direction to the second axial direction in the ROI, the near object area may be detected. Details thereof will be described with reference to FIG. 4.

In S130, when the near object area is detected, a point plane may be generated in 3D coordinates based on the detected near object area, and a mask corresponding to the near object area may be generated based on the point plane in an image coordinate system (S140 and S150).

According to an exemplary embodiment of the present disclosure, in S150, when the point cloud of the target LiDAR in a LiDAR coordinate system is transformed into the point cloud of the target LiDAR in the image coordinate system using extrinsic parameters between the target camera and the target LiDAR and internal parameters of the target camera, the mask may be generated using the point plane in the point cloud of the target LiDAR in the image coordinate system.

According to an exemplary embodiment of the present disclosure, in S150, the mask corresponding to the near object area within the image coordinate system may be generated based on the point cluster of the point plane in the point cloud of the target LiDAR within the image coordinate system.

When the mask corresponding to the near object area is generated in S150, a depth map in a multi-LIDAR environment may be generated by removing points of other LiDARs except for the points of the target LiDAR in the near object area through mask filtering (S160).

When the depth map is generated by removing points of other LiDARs from the near object area in S160, the depth map may be provided by visualizing the points of the LiDARs by distance or by visualizing the points of the LiDARs by individual LiDAR point (S170).

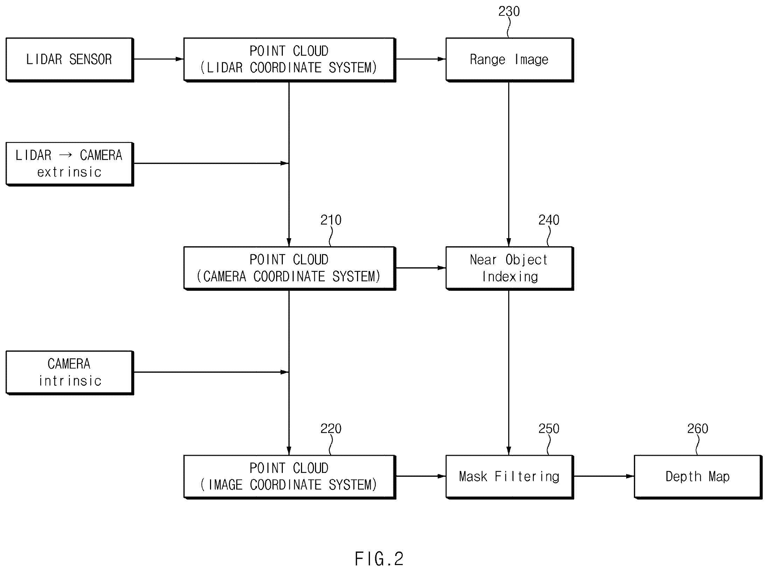

The depth map generation process of the present disclosure will be described in more detail with reference to FIG. 2, FIG. 3, FIG. 4, FIG. 5, FIG. 6, FIG. 7, and FIG. 8 as follows.

FIG. 2 is a schematic diagram providing the overall process of generating a depth map.

Referring to FIG. 2, when a target LiDAR including a similar position and view to a target camera is selected, a point cloud in the LiDAR coordinate system may be obtained from a selected target LiDAR sensor. Here, a cloud of points in the LiDAR coordinate system may be the output of the LiDAR sensor, where (X, Y, Z) = (0, 0, 0) may be configured based on the LiDAR sensor.

The point cloud in the LiDAR coordinate system may be transformed into the point cloud in the camera coordinate system by an extrinsic variable between the LiDAR and the camera. The extrinsic variable between the LiDAR and the camera may refer to a matrix configured for coordinately transforming an origin based on the LiDAR sensor to an origin based on the camera sensor, and as shown in <Equation 1> below, an extrinsic matrix with [R | t] values is required, and the detailed description of the extrinsic matrix is omitted because it is obvious to those skilled in the art engaged in the technology of the present disclosure.

[Equation 1]

$$\begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \times \begin{bmatrix} X^T \\ Y^T \\ Z^T \\ 1 \end{bmatrix}$$

That is, the point cloud ($X_C$, $Y_C$, $Z_C$) may be expressed based on the camera coordinate system by applying the extrinsic matrix of the camera to the point cloud (X, Y, Z) based on the LiDAR coordinate system.

A point cloud 210, which has transformed into that of the camera coordinate system, may be transformed into a point cloud 220 within the image coordinate system using the intrinsic variable of the camera. That is, a certain point (X, Y, Z) within the 3D camera coordinate system may be transformed into a point in a 2D image coordinate system (U, V) using the intrinsic variable of the camera. In the instant case, the point cloud 210, which has transformed into that of the camera coordinate system, may be transformed into the point cloud 220 in the image coordinate system as shown in <Equation 2> below.

[Equation 2]

$$\begin{bmatrix} f_x & 0 & c_x \\ 0 & f_y & c_y \\ 0 & 0 & 1 \end{bmatrix} \times \frac{1}{Z_c} \begin{bmatrix} X_c & Y_c & Z_c \end{bmatrix} = \begin{bmatrix} f_x \frac{X_c}{Z_c} + c_x & f_y \frac{Y_c}{Z_c} + c_y & 1 \end{bmatrix}$$

$$= \begin{bmatrix} U_{img} & V_{img} & 1 \end{bmatrix}$$

In Equation 2, a first matrix refers to intrinsic, $f_x$ and $f_y$ refer to a focal length of the camera, $c_x$ and $c_y$ refer to a principal point of the camera, and ($U_{img}$, $V_{img}$) refers to the 2D image coordinate system.

The method according to an exemplary embodiment of the present disclosure may generate a range image 230 using the point cloud within the LiDAR coordinate system, that is, the point cloud of the target LiDAR sensor. Here, the range image is an image generated by applying Spherical Projection to LiDAR points, and may be generated from each LiDAR point cloud rather than from the sum of all LiDAR points.

The range image may include a structure of HxWxC like a general image, and in the case of channel C, desired values such as distance, x, y, z, and intensity may be input while being matched. The method according to the exemplary embodiment of the present disclosure may use a reference value "z" based on the vehicle coordinate system value and a distance value. Here, the method of generating a range image is also obvious to those skilled in the art engaged in the technology of the present disclosure, so a detailed description thereof is omitted.

Next, a process of detecting a near object area (Near Object Indexing) 240 using the range image of the target LiDAR may be performed.

Various parameters may be used in the process of detecting the near object area (Near Object Indexing) 240, and a height threshold, a gradient threshold, and a distance threshold may be used.

The height threshold is a parameter dependent on the LiDAR, and may be the height of the LiDAR point from the ground. The height threshold is a criterion for determining whether it is the ground or not, and may be determined by considering the accuracy of the LiDAR sensor and the error of calibration. For example, the height threshold may be set to determine that 0.1 m or less is the ground.

The gradient threshold may refer to the gradient for a height mentioned in the height threshold.

The distance threshold is a parameter dependent on the LiDAR, the camera, and the image size, and its value may be determined according to a density of LiDAR points in the near object area. The density of LiDAR points "D" in the near object area may be expressed as in <Equation 3> below.

[Equation 3]

$$D \propto \frac{L_H}{FL \times H \times W}$$

In Equation 3, $L_H$ refers to the resolution of a LiDAR, "H" refers to the height of an image, "W" refers to the width of the image, and FL refers to the focal length of a camera.

For example, if "W" and "H" increase to infinity, the size of the image is extremely large, so that the density of LiDAR points in the near object area approaches 0.

For another example, if $L_H$ is infinitely high, all pixels of the image are filled with LiDAR points.

As an exemplary embodiment of the present disclosure, if the FL is extremely large, the image appears to be greatly enlarged, as if the camera magnification was increased, so that the entire image is covered by a very small portion of a near object, and as a result, the density of the LiDAR points approaches 0. On the other hand, if the FL is low, the image appears to be reduced, as if the camera magnification was decreased, so that the near object area in the image is reduced, and as a result, the near object appears to be a distant object.

The process of detecting the near object area (Near Object Indexing) 240 using these parameters is described in detail as follows.

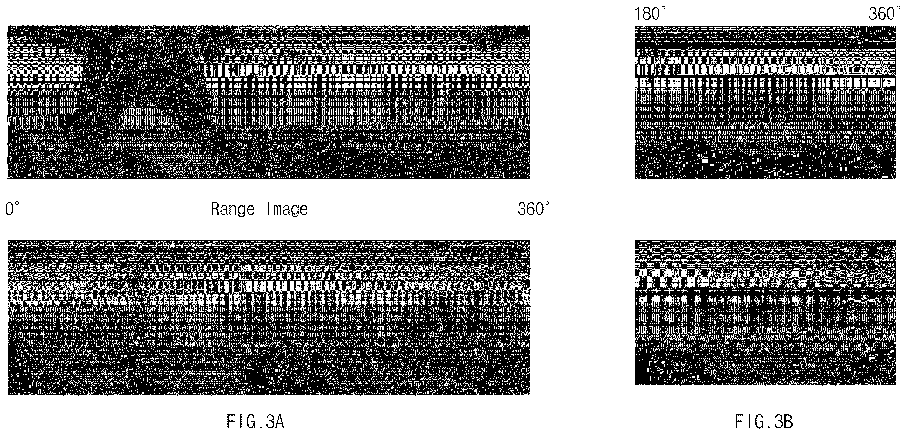

In a range image generated by the point cloud of the target LiDAR, a region of interest (ROI) including the near object area may be determined. For example, as shown in FIG. 3A and FIG. 3B, a Horizontal ROI (FIG. 3A) corresponding to the region of interest may be determined in the range image of the target LiDAR (FIG. 3B), and the range image may be cropped to retain only the Horizontal ROI. In the instant case, only the Horizontal ROI may be used to exclude unnecessary portions for determining a near object in a camera area.

From the range image with only the Horizontal ROI, a gradient for height may be determined for each Ur, and using a height threshold, a gradient threshold, and a distance threshold in the Vr direction, the starting point and ending point of a near object points may be determined.

For each Ur, Vr may be determined in the direction away from the ground near to the vehicle. For example, when the height threshold is greater than 0.1 m, it is determined that it is not the ground, and the starting point of the near object 410 (see FIG. 4) may be determined based on a point at which the sign of the gradient first changes while satisfying the height threshold. A point may be determined as the ending point of the near object 420 (see FIG. 4) when the point exceeds the distance threshold. When the number of points between the starting point and the ending point of the near object is significantly low, for example, 10 or fewer, it may be determined that the area is not the near object area. By repeating the process, as shown in FIG. 4, the ground starting point 410 and ground ending point 420 of a near object are detected to detect the near object area.

When the near object area is detected in the range image of the Horizontal ROI, the starting point and the ending point of the near object may be stacked by height through interpolation in three-dimensional coordinates to generate a point plane for mask generation.

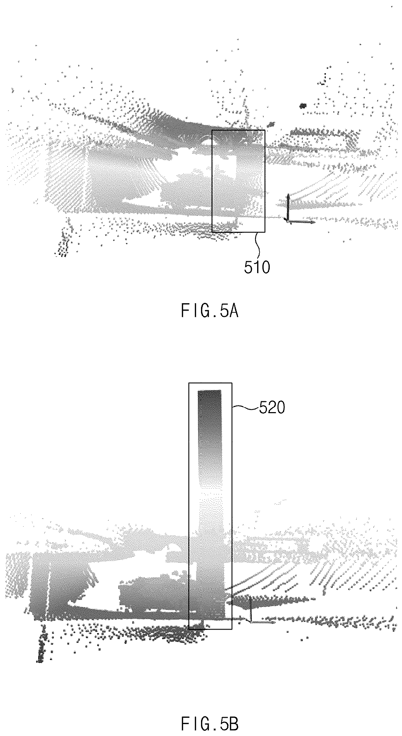

For example, as illustrated in FIG. 5A, when "z" in three-dimensional coordinates is assumed to be the height from the ground, a first plane 510 may be generated by generating a dotted line on the ground through interpolation using coordinates (x, y) of the starting point and coordinates (x, y) of the ending point on the ground (z=0), and stacking the dotted lines by height. Accordingly, as shown in FIG. 5B, a point plane 520 may be generated by extending the height range to stack the dotted lines to a degree sufficient to be covered with the mask from the ground to the end portion of the camera image in the camera image. In the case of FIG. 5B, the point plane 520 may be generated by stacking the dotted lines from 0 to 10 m.

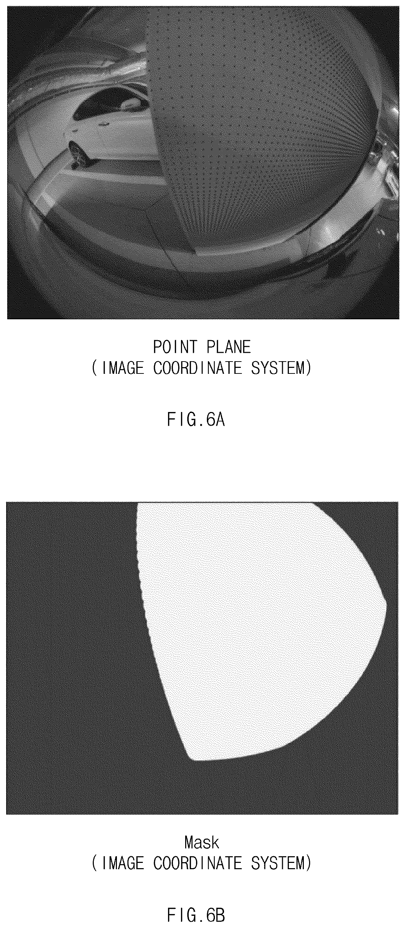

When the point plane is generated through the aforementioned process, a mask filtering process 250 may be performed to generate a mask using the point plane in the image coordinate system. For example, as illustrated in FIG. 6A, the point plane may be applied to the image coordinate system, and a mask in the image coordinate system may be generated to remove points of other LiDAR, as shown in FIG. 6B, based on the clusters of points included in the point plane in the image coordinate system. Here, the mask may be generated based on the point cloud of the target LiDAR, and the method according to the exemplary embodiment of the present disclosure may be to remove points of other LiDARs, which are formed in the near object area by using the mask.

When the mask corresponding to the near object area is generated, the points of other LiDARs except for the target LiDAR within the mask area may be removed through mask filtering. In the case of the target LiDAR, only points including similar distances to the points corresponding to the point plane may be remained, and the rest may be removed.

By removing points of other LiDARs included in the mask area through the above-described process, a depth map GT 260 including the near object may be generated.

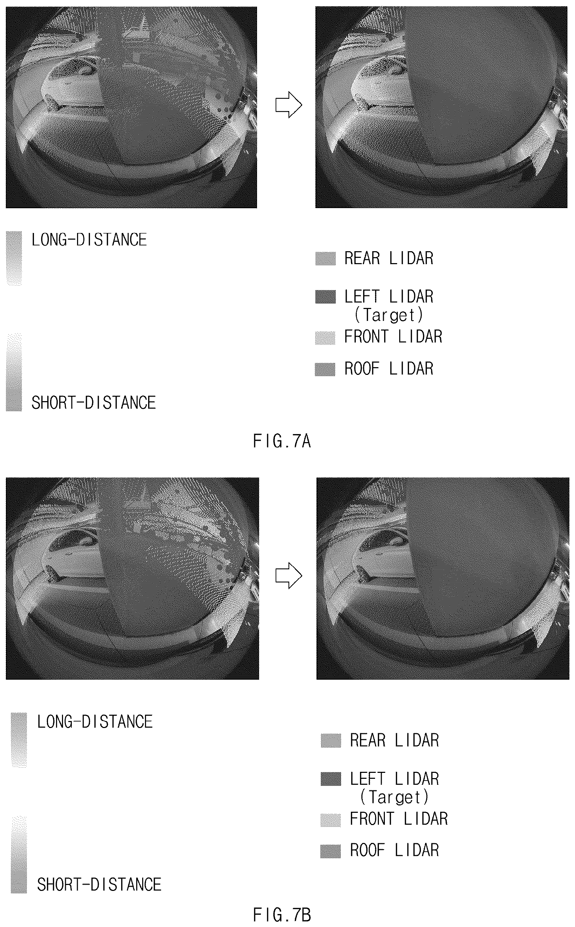

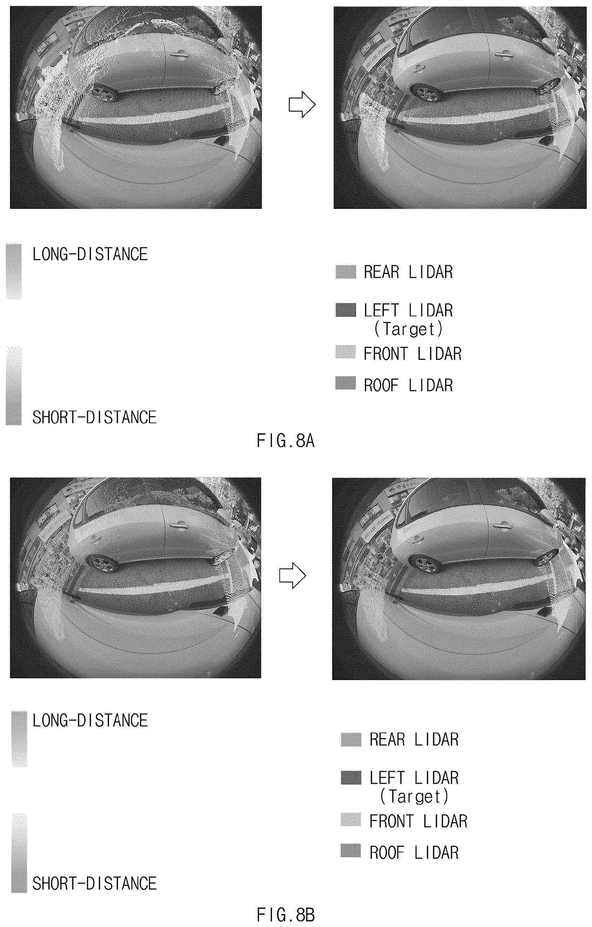

FIG. 7A and FIG. 7B show examples of providing a depth map by visualizing points of LiDARs by distance and by LiDAR, respectively, and FIG. 8A and FIG. 8B show other examples of providing a depth map by visualizing points of LiDARs by distance and by LiDAR, respectively.

Referring to FIGS. 7A to 8B, for points of LiDARs, a depth map may be provided by visualizing points of LiDARs by distance (see FIG. 7A and FIG. 8A) or may be provided by visualizing points of LiDARs by individual LiDAR point (see FIG. 8B and FIG. 8B). In other words, the method according to an exemplary embodiment of the present disclosure may provide the depth map generated in a multi-LIDAR environment by visualizing points of all LiDARs by distance information, or by visualizing points of each LiDAR differently from points of other LiDARs in a multi-LIDAR environment. In the instant case, information related to the target LiDAR may also be displayed, and either distance-based visualization or LiDAR-based visualization may be selected for presentation, or both modes may be provided together. Depending on the situation, both a depth map including points in a near object area and a depth map GT from which points in the near object area have been removed may be displayed together.

As described above, the method according to an exemplary embodiment of the present disclosure may detect a near object area based on a range image in a multi-LIDAR environment and generate depth maps by correcting points in the near object areas.

Additionally, the method according to an exemplary embodiment of the present disclosure may improve the depth map GT without utilizing a GPU.

Furthermore, the method according to an exemplary embodiment of the present disclosure may facilitate visually identifying the depth map GT by visualizing points of LiDARs by distance or by LiDAR in a multi-LIDAR environment.

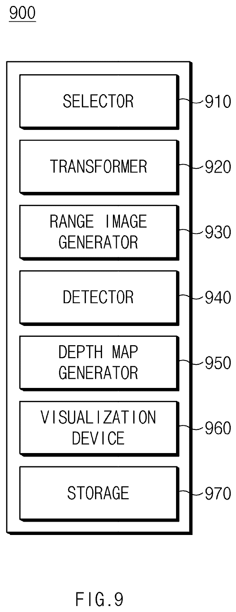

FIG. 9 shows a block diagram of a depth map generation device according to another exemplary embodiment of the present disclosure, which illustrates a conceptual block diagram for a device that performs the methods shown in FIG. 1, FIG. 2, FIG. 3, FIG. 4, FIG. 5, FIG. 6, FIG. 7 and FIG. 8.

Referring to FIG. 9, a depth map generation device 900 according to another exemplary embodiment of the present disclosure may include a selector 910, a transformer 920, a range image generator 930, a detector 940, a depth map generator 950, a visualization device 960, and storage 970.

The storage 970 may be a means for storing data related to the technology of the present disclosure, including extrinsic variables between a LiDAR and a camera, intrinsic variables of a camera, a coordinate transformation algorithm, information for each LiDAR, point clouds, range images, depth map GT, near object detection algorithms, camera images, and the like.

The selector 910 may select a target LiDAR from among a plurality of LiDARs.

According to an exemplary embodiment of the present disclosure, in S110, the selector 910 may select a LiDAR including a similar view to a target camera as a target LiDAR. The selector 910 may select a LiDAR including the most similar position and view to the target camera as the target LiDAR.

The transformer 920 may transform the point cloud of the target LiDAR in the LiDAR coordinate system into the point cloud of the target LiDAR in the image coordinate system by using the extrinsic parameter between the target camera and the target LiDAR, along with the intrinsic parameter of the target camera.

In the instant case, the transformer 920 may transform the point cloud in the LiDAR coordinate system into the point cloud in the camera coordinate system using the extrinsic parameters (or extrinsic variables) between the target camera and the target LiDAR and transform the point cloud in the camera coordinate system into the point cloud in the image coordinate system using the intrinsic parameters (or intrinsic variables) of the target camera.

The range image generator 930 may be configured to generate a range image using the point cloud of the target LiDAR.

The detector 940 may identify or determine a region of interest (ROI) that includes a near object area from the range image and detect the near object area within the ROI of the range image.

According to an exemplary embodiment of the present disclosure, the detector 940 may detect the near object area in the ROI using at least one preset threshold. For example, the detector 940 may detect the starting point and ending point of near object points in the ROI using preset height threshold and length threshold, and based on the starting point and the ending point of the near object points detected from the first axial direction to the second axial direction in the ROI, detect the near object area.

The depth map generator 950 may be configured to generate a point plane in three-dimensional coordinates based on the near object area, and generate a mask corresponding to the near object area based on the point plane in the image coordinate system. Accordingly, the depth map generator 950 may remove points of other LiDARs than the points of the target LiDAR in the near object area by performing mask filtering, generating a depth map in a multi-LIDAR environment.

The visualization device 960 may provide the depth map by visualizing points of LiDARs by distance or by visualizing points of LiDARs by individual LiDAR point.

Although the description may be omitted for devices according to other embodiments of the present disclosure, the devices according to other embodiments of the present disclosure may include all content described in the methods shown in Figures 1 to 8, which is obvious to those skilled in the art in the field of the present disclosure.

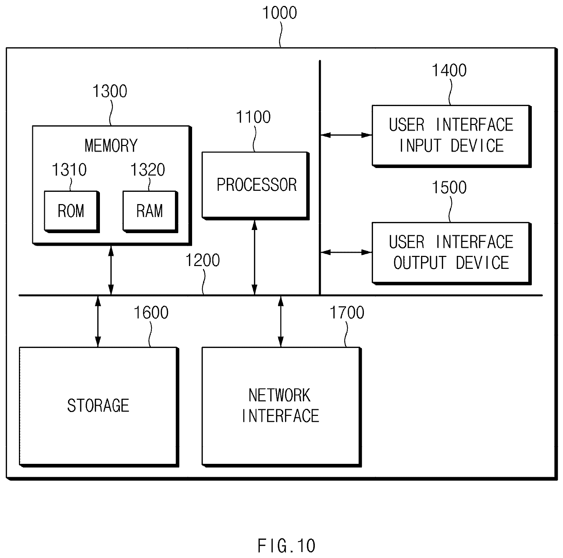

FIG. 10 illustrates a block diagram of a computing system for executing a depth map generation method according to an exemplary embodiment of the present disclosure.

Referring to FIG. 10, the depth map generation method according to the exemplary embodiment of the present disclosure described above may be implemented through the computing system. A computing system 1000 may include at least one processor 1100, a memory 1300, a user interface input device 1400, a user interface output device 1500, storage 1600, and a network interface 1700, which are connected to each other via a system bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a Read-Only Memory (ROM) 1310 and a Random Access Memory (RAM) 1320.

Thus, the operations of the method or the algorithm described in connection with the exemplary embodiments included herein may be embodied directly in hardware or a software module executed by the processor 1100, or in a combination thereof. The software module may reside on a storage medium (that is, the memory 1300 and/or the storage 1600) such as a RAM, a flash memory, a ROM, an EPROM, an EEPROM, a register, a hard disk, a removable disk, and a CD-ROM. The exemplary storage medium may be coupled to the processor 1100, and the processor 1100 may read information out of the storage medium and may record information in the storage medium. Alternatively, the storage medium may be integrated with the processor 1100. The processor 1100 and the storage medium may reside in an application specific integrated circuit (ASIC). The ASIC may reside within a user terminal. In another case, the processor 1100 and the storage medium may reside in the user terminal as separate components.

The exemplary embodiments described herein may be implemented with hardware components and software components and/or a combination of the hardware components and the software components. For example, the apparatus, method and components described in the exemplary embodiments of the present disclosure may be implemented using a general-purpose or special purpose computers, such as a processor, a controller and an arithmetic logic unit (ALU), a digital signal processor, a microcomputer, a field programmable array (FPGA), a programmable logic unit (PLU), a microprocessor or any other device configured for executing and responding to instructions. The processing device may run an operating system (OS) and one or more software applications that run on the OS. The processing device also may access, store, manipulate, process, and generate data in response to execution of the software. For convenience of understanding, one processing device is referred to as being used, but those skilled in the art will appreciate that the processing device includes a plurality of processing elements and/or multiple types of processing elements. For example, the processing device may include multiple processors or a single processor and a single controller. Furthermore, different processing configurations are possible, such as parallel processors.

The software may include computer programs, codes, instructions, or a combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more computer readable recording mediums.

The above-described methods may be embodied in the form of program instructions which may be executed by various computer means and recorded on a computer-readable medium. The computer readable medium may include program instructions, data files, data structures, and the like, alone or in combination. Program instructions recorded in the media may be those specially designed and constructed for the purposes of the inventive concept, or they may be of the kind well-known and available to those having skill in the computer software arts. Examples of computer readable recording media include magnetic media such as hard disks, floppy disks and magnetic tape, optical media such as CD-ROMs, DVDs, and magnetic disks such as floppy disks, Magnetooptical media, and hardware devices specifically configured to store and execute program instructions, such as ROM, RAM, flash memory, and the like. Examples of program instructions include not only machine code generated by a compiler, but also high-level language code which may be executed by a computer using an interpreter or the like. The hardware device described above may be configured to operate as one or more software modules to perform the operations of the present disclosure, and vice versa.

Although the exemplary embodiments have been described by the limited embodiments and the drawings as described above, various modifications and variations are possible to those skilled in the art from the above description. For example, the described techniques may be performed in a different order than the described method, and/or components of the described systems, structures, devices, circuits, etc. may be combined or combined in a different form than the described method, or other components, or even when replaced or substituted by equivalents, an appropriate result may be achieved.

The above description is merely illustrative of the technical idea of the present disclosure, and various modifications and variations may be made without departing from the essential characteristics of the present disclosure by those skilled in the art to which the present disclosure pertains. Accordingly, the exemplary embodiment included in an exemplary embodiment of the present disclosure is not intended to limit the technical idea of the present disclosure but to describe the present disclosure, and the scope of the technical idea of the present disclosure is not limited by the embodiment. The scope of protection of the present disclosure should be interpreted by the following claims, and all technical ideas within the scope equivalent thereto should be construed as being included in the scope of the present disclosure.

According to an exemplary embodiment of the present disclosure, a near object area may be detected based on a range image in a multi-LIDAR environment, and a depth map may be generated by correcting points in the near object area.

According to an exemplary embodiment of the present disclosure, a depth map GT (Ground Truth) map may be improved without utilizing a GPU.

The benefits obtainable in the present disclosure are not limited to the aforementioned benefits, and any other benefits not mentioned herein will be clearly understood from the following description by those skilled in the art to which the present disclosure pertains.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

**Claims**

1. A depth map generation apparatus comprising:

   a memory configured to store computer-executable instructions; and
   at least one processor operatively connected to the memory and configured to access the memory and execute the instructions to:

   select a target Light Detection and Ranging (LiDAR) from among a plurality of LiDARs;
   generate a range image using a point cloud of the target LiDAR;
   detect a near object area from the range image using the range image and at least one preset threshold;
   generate a point plane in three-dimensional coordinates based on the near object area;
   generate a mask corresponding to the near object area based on the point plane in an image coordinate system; and
   generate a depth map by removing points of other LiDARs than the target LiDAR, from the near object area using the mask.

2. The depth map generation apparatus of claim 1, wherein the at least one processor is further configured to select, as the target LiDAR, a LiDAR including a most similar position and view to a target camera from among the LiDARs.

3. The depth map generation apparatus of claim 1 or 2, wherein the at least one processor is further configured to determine a region of interest that includes the near object area from the range image and detect the near object area using the region of interest and the at least one threshold.

4. The depth map generation apparatus of claim 3, wherein the at least one processor is further configured to detect a starting point and an ending point of near object points in the region of interest using preset height threshold and length threshold, and based on the starting point and the ending point of the near object points detected from a first axial direction to a second axial direction in the region of interest, identify the near object area.

5. The depth map generation apparatus of claim 2, wherein the at least one processor is further configured to:

   transform the point cloud of the target LiDAR in a LiDAR coordinate system into the point cloud of the target LiDAR in the image coordinate system by using an extrinsic parameter between the target camera and the target LiDAR, along with an intrinsic parameter of the target camera; and
   generate the mask using the point plane from the point cloud of the target LiDAR in the image coordinate system.

6. The depth map generation apparatus of one of claims 1 to 5, wherein the at least one processor is further configured to provide the depth map by visualizing points of the LiDARs by distance.

7. The depth map generation apparatus of one of claims 1 to 6, wherein the at least one processor is further configured to provide the depth map by visualizing points of the LiDARs by individual LiDAR point.

8. A depth map generation method comprising:

   selecting, by a processor, a target Light Detection and Ranging (LiDAR) from among a plurality of LiDARs;
   generating, by the processor, a range image using a point cloud of the target LiDAR;

detecting, by the processor, a near object area from the range image using the range image and at least one preset threshold;

generating, by the processor, a point plane in three-dimensional coordinates based on the near object area;

generating, by the processor, a mask corresponding to the near object area based on the point plane in an image coordinate system; and

generating, by the processor, a depth map by removing points of other LiDARs than the target LiDAR, from the near object area using the mask.

9. The depth map generation method of claim 8, wherein the selecting of the target LiDAR includes selecting, as the target LiDAR, a LiDAR including a most similar position and view to a target camera from among the LiDARs.

10. The depth map generation method of claim 8 or 9, wherein the detecting of the near object area includes determining a region of interest that includes the near object area from the range image and detecting the near object area using the region of interest and the at least one threshold.

11. The depth map generation method of claim 10, wherein the detecting of the near object area includes:

detecting a starting point and an ending point of near object points in the region of interest using preset height threshold and length threshold; and

based on the starting and the ending point of the near object points detected from a first axial direction to a second axial direction in the region of interest, identifying the near object area.

12. The depth map generation method of claim 9, further comprising:

transforming the point cloud of the target LiDAR in the LiDAR coordinate system into the point cloud of the target LiDAR in the image coordinate system by using an extrinsic parameter between the target camera and the target LiDAR, along with an intrinsic parameter of the target camera; and

wherein the generating of the mask includes generating the mask using the point plane from the point cloud of the target LiDAR in the image coordinate system.

13. The depth map generation method of one of claims 8 to 12, further comprising:
providing the depth map by visualizing points of the LiDARs by distance.

14. The depth map generation method of one of claims 8 to 13, further including:
providing the depth map by visualizing points of the LiDARs by individual LiDAR point.

15. A non-transitory computer readable storage medium on which a program for performing the method of one of claims 8 to 14 is recorded.

```
                    ┌─────────────┐
                    │    START    │
                    └─────────────┘
                           │
                           ▼
        ┌─────────────────────────────────────────┐
        │         SELECT  TARGET  LIDAR           │──S110
        └─────────────────────────────────────────┘
                           │
                           ▼
        ┌─────────────────────────────────────────┐
        │         GENERATE  RANGE  IMAGE          │──S120
        └─────────────────────────────────────────┘
                           │
                           ▼
        ┌─────────────────────────────────────────┐
        │  DETECT  NEAR  OBJECT  AREA  FROM  RANGE  IMAGE  │──S130
        └─────────────────────────────────────────┘
                           │
                           ▼
        ┌─────────────────────────────────────────┐
        │         GENERATE  POINT  PLANE          │──S140
        └─────────────────────────────────────────┘
                           │
                           ▼
        ┌─────────────────────────────────────────┐
        │  GENERATE  MASK  CORRESPONDING  NEAR  OBJECT  AREA  │──S150
        └─────────────────────────────────────────┘
                           │
                           ▼
        ┌─────────────────────────────────────────┐
        │  GENERATE  DEPTH  MAP  BY  REMOVING  POINTS  OF  │──S160
        │     OTHER  LIDARS  FROM  NEAR  OBJECT  AREA     │
        └─────────────────────────────────────────┘
                           │
                           ▼
        ┌─────────────────────────────────────────┐
        │  PROVIDE  DEPTH  MAP  BY  VISUALIZING  POINTS  OF  │──S170
        │  LIDARS  BY  DISTANCE  OR  INDIVIDUAL  LIDAR  POINT  │
        └─────────────────────────────────────────┘
                           │
                           ▼
                    ┌─────────────┐
                    │     END     │
                    └─────────────┘
```

FIG.1

FIG.2

FIG.3B

FIG.3A

EP 4 718 114 A1

FIG.4

15

510

FIG.5A

520

FIG.5B

POINT PLANE
(IMAGE COORDINATE SYSTEM)

FIG.6A

Mask
(IMAGE COORDINATE SYSTEM)

FIG.6B

FIG.7A

FIG.7B

LONG-DISTANCE

SHORT-DISTANCE

REAR LIDAR

LEFT LIDAR
(Target)

FRONT LIDAR

ROOF LIDAR

FIG.8A

LONG-DISTANCE

SHORT-DISTANCE

REAR LIDAR

LEFT LIDAR
(Target)

FRONT LIDAR

ROOF LIDAR

FIG.8B

<u>900</u>

FIG.9

1000

1300

1100

1400
USER INTERFACE
INPUT DEVICE

MEMORY

1310    1320

ROM     RAM

PROCESSOR

1500
USER INTERFACE
OUTPUT DEVICE

1200

1600

1700

STORAGE

NETWORK
INTERFACE

FIG.10

Europäisches
Patentamt

European
Patent Office

Office européen
des brevets

# EUROPEAN SEARCH REPORT

**Application Number**

EP 25 17 8148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUOHANG YAN ET AL: "OpenCalib: A multi-sensor calibration toolbox for autonomous driving", ARXIV.ORG, CORNELL UNIVERSITY LIBRARY, 201 OLIN LIBRARY CORNELL UNIVERSITY ITHACA, NY 14853, 27 May 2022 (2022-05-27), XP091234169, * abstract; figures 1-7 * * page 2, paragraphs A, B * * page 3, paragraph D * * page 5, right-hand column, last paragraph - page 6, left-hand column, paragraph first * * page 8, right-hand column, paragraph first 2 * * page 11, left-hand column, paragraph first - right-hand column, paragraph first; figures 21-25 * | 1-15 | INV. G01S7/497 G01S17/86 G01S17/931 |
| A | US 2020/174107 A1 (BRIGGS FORREST SAMUEL [US] ET AL) 4 June 2020 (2020-06-04) * abstract; figures 1-4, 6-8 * * paragraphs [0039], [0043] * | 1-15 | |
| A | CN 111 260 781 B (BEIJING YUNJI TECH CO LTD) 19 April 2024 (2024-04-19) * abstract; figures 1-3 * * paragraphs [0040], [0043] * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 28 October 2025 | Cordeiro, J |

EPO FORM 1503 03.82 (P04C01)

EP 4 718 114 A1

## ANNEX TO THE EUROPEAN SEARCH REPORT
## ON EUROPEAN PATENT APPLICATION NO.

EP 25 17 8148

28-10-2025

| Patent document cited in search report | Publication date | Patent family member(s) | Publication date |
|---|---|---|---|
| US 2020174107 A1 | 04-06-2020 | NONE | |
| CN 111260781 B | 19-04-2024 | NONE | |

**EP 4 718 114 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240130221